# EUROPEAN PATENT APPLICATION

(11) **EP 2 863 105 A1**
(43) Date of publication of application: **22.04.2015**
(21) Application number: 13803803.9
(22) Date of filing: 12.06.2013
(51) Int. Cl.: F21S 2/00, F21V 3/04, H01L 33/00, F21Y 101/02

(54) **PLANAR ILLUMINATION DEVICE AND DISPLAY DEVICE HAVING PLANAR ILLUMINATION DEVICE**

(30) Priority: 13.06.2012 JP 2012133832; 14.09.2012 JP 2012203712
(71) Applicant: Citizen Electronics Co., Ltd., Fujiyoshida-shi, Yamanashi 403-0001 (JP); Citizen Holdings Co., Ltd., Nishitokyo-shi, Tokyo 188-8511 (JP)
(72) Inventor: MIYASHITA, Junji, Fujiyoshida-shi Yamana-shi 403-0001 (JP); WATANABE, Kiyokazu, Fujiyoshida-shi Yamana-shi 403-0001 (JP); NAKAMURA, Izumi, Fujiyoshida-shi Yamana-shi 403-0001 (JP); YASUHARA, Makoto, Fujiyoshida-shi Yamana-shi 403-0001 (JP)
(74) Representative: Dendorfer, Claus
(86) International application number: PCT/JP2013/003680
(87) International publication number: WO 2013/187058

(57) **Abstract**

Provided is a planar lighting device configured to achieve light emission with an angle with respect to a light-exit surface of the planar lighting device. Also, provided is a display device with a display panel viewable, even when the display panel is seen obliquely.

According to a first aspect of the present invention, it is disclosed that a planar lighting device includes a light-guide plate 2; a light source 3 including a light-emitting surface 3a that faces a first side surface 2ca of the light-guide plate and the light source with a center line that passes through a center of the light-emitting surface 3a of the light source and that is perpendicular to the first side surface 2ca of the light-guide plate 2; a first prism sheet 4 including a prism 40 arranged on a lower surface of the first prism sheet 4; and a second prism sheet 6 including a prism 60 arranged on an upper surface. It is disclosed that a ridge line of the prism arranged on the lower surface of the first prism sheet extends in parallel with the center line of the light-emitting surface of the light source. Also, it is disclosed that a ridge line of the prism arranged on the upper surface of the second prism sheet extends substantially perpendicular to the center line of the light-emitting surface of the light source. In addition, a display device including the planar lighting device according to the aspect of the present invention.

## Description

### Field

The present invention relates to a planar lighting device, and a display device including the planar lighting device.

### Background

In an electronic device such as mobile phone, PDA, mobile PC (Personal Computer), notebook PC, car navigation system, portable game console, portable music player, etc., a display device including a display panel and a planar lighting device to illuminate the display panel is widely adopted. As an example of the planar lighting device, there is a backlight unit arranged at a rear side of the display panel. Such a backlight unit is configured to illuminate a display panel from a rear side of the display panel. Also, as an example of the display panel, there is a liquid crystal display panel.

In Patent Literature 1, for example, it is disclosed in public that a backlight unit includes a light-guide plate, a diffusion plate arranged over an upper surface of the light-guide plate, two prism sheets arranged over the diffusion plate to propose a display with high brightness and a wide view angle in a predetermined direction. These two prism sheets include a plurality of prisms on respective upper surfaces of the two prism sheets. In this backlight unit, one prism sheet including a prism extending perpendicularly to a direction, which is required to be wider-angled, is configured to have lower light collectivity than the other prism sheet. Also, it is disclosed that prisms of the one prism sheet and prisms of the other prism sheet are arranged to be perpendicular to each other.

### Citation List

### Patent Literature

Patent Literature 1: Japanese Patent Application Laid-Open No. H8-36179.

### Summary

### Technical Problem

The structure disclosed in the Patent Literature 1 is considered to be effective in a case that light is configured to be discharged in a direction perpendicular to the light-exit surface of the light-guide plate.

According to a planar lighting device of an embodiment of the present invention, a structure of a lighting device achievable to acquire sufficient light in an obliquely upward direction with respect to the light-exit surface of the light-guide plate is disclosed. Also, it is disclosed that a lighting device achievable to acquire sufficient outgoing light in an obliquely upward direction as well as perpendicular direction with respect to the light-exit surface of the light-guide plate. Furthermore, it is disclosed that a display device includes a planar lighting device according to an embodiment of the present invention and the display device whose angle range (view angle) is settable to be wide, wherein displayed contents are distinctly viewed within the angle range. Solution to Problem

As a first aspect of the present invention, a planar lighting device includes a light-guide plate that includes an upper surface as a light-exit surface, a lower surface opposite to the upper surface, and a peripheral side surface extending between a peripheral edge of the upper surface and a peripheral edge of the lower surface; a light source including a light-emitting surface that faces a first side surface included in the peripheral side surface of the light-guide plate, and a center line that passes through a center of the light-emitting surface of the light source being perpendicular to the first side surface included in the peripheral side surface of the light-guide plate; a first prism sheet including an upper surface as a light-exit surface, a lower surface opposite to the upper surface, a peripheral side surface extending between a peripheral edge of the upper surface and a peripheral edge of the lower surface, and a prism arranged on the lower surface of the first prism sheet, and the lower surface facing the upper surface of the light-guide plate, and a ridge line of the prism being extending in parallel with the center line of the light-emitting surface of the light source; and a second prism sheet being positioned over the first prism sheet and including an upper surface as a light-exit surface, a lower surface opposite to the upper surface, a peripheral side surface extending between a peripheral edge of the upper surface and a peripheral edge of the lower surface, a prism arranged on the upper surface of the second prism sheet.

Also, it is disclosed that a ridge line of the prism arranged on the second prism sheet extends substantially perpendicular to the center line of the light-emitting surface of the light source.

As a second aspect of the present invention, it is disclosed that light sources may be arranged at a second side surface opposite to the first side surface of the light-guide plate as well as at a first side surface of the light-guide plate.

It is also disclosed that the planar lighting device further includes a light diffusing sheet being arranged between the first prism sheet and the second prism sheet.

Also, it is disclosed that the light diffusing sheet has an anisotropic diffusion coefficient characterized in that light is more diffused in a direction perpendicular to the center line of the light-emitting surface of the light source than in a direction parallel to the center line of the light-emitting surface of the light source.

It is disclosed that the planar lighting device may include a view-angle restriction filter including a louver and arranged over the second prism sheet. Also, the louver of the view-angle restriction filter and the ridge line of the prism arranged on the second prism sheet are arranged to extend at an angle with each other, when viewed from above.

Also, a display device includes a planar lighting device according to an embodiment of the present invention; and a display panel that includes an upper surface as a display surface, a lower surface opposite to the upper surface, and the lower surface facing the planar lighting device.

### Advantageous Effects of Invention

According to an embodiment of planar lighting device of the present invention, it is disclosed that a planar lighting device is configured to acquire sufficient outgoing light in an obliquely upward direction as well as in a perpendicular direction with respect to the light-exit surface of the light-guide plate. Furthermore, it is disclosed that a display device including a planar lighting device according to an embodiment of the present invention, and the display device configured to be set an angle range (view angle) to be wide, where displayed contents are distinctly viewed.
Accordingly, it is possible to apply an aspect disclosed by the present invention to a display device whose display panel may be viewed from different positions.

### Brief Description of Drawings

Fig. 1 is an exploded perspective view showing a backlight unit as a planar lighting device according to a first embodiment of the present invention.
Fig. 2 is an enlarged cross sectional view of a main part of the planar lighting device shown in Fig. 1. Fig. 2 also shows an enlarged cross sectional view of a main part of a display device according to a first embodiment of the display device, which includes the planar lighting device and a display panel that is arranged over the planar lighting device.
Fig. 3 is a graph showing directivity of emitted light in X direction and Y direction that are perpendicular to each other in the planar lighting device according to the first embodiment of the present invention.
Fig. 4 is an exploded perspective view showing a backlight unit as a planar lighting device according to a second embodiment of the present invention.
Fig. 5 shows an enlarged view of a main part of a planar lighting device according to a third embodiment of a planar lighting device. Fig. 5 also shows an enlarged cross sectional view of a main part of a display device according to a second embodiment of the display device, which includes the planar lighting device and a display panel that is arranged over the planar lighting device.
Fig. 6 is a graph comparing directivity of emitted light in the X direction and directivity of outgoing light in the Y direction that is set to be narrower angle of outgoing light than that in the X direction in the planar lighting device according to the third embodiment of the present invention. Here, the graph shows a shifted peak position of the outgoing light in the Y direction, which is a direction of outgoing light with the narrower angle.
Fig. 7 is a plan view showing a relationship of louver of a view-angle restriction filter and ridges of prisms of the second prism sheet in the planar lighting device according to the third embodiment of the present invention.
Fig. 8 is an exploded perspective view showing a backlight unit as a planar lighting device according to a fourth embodiment of planar lighting device of the present invention.
Fig. 9 is a graph showing a relationship of angle variations of apex of prisms arranged on the first prism sheet and directivity of outgoing light from light-exit surface in the X direction, in a planar lighting device according to a fourth embodiment of the present invention.
Fig. 10 is an exploded perspective view showing a backlight unit as a planar lighting device according to a fifth embodiment of a lighting device of the present invention.

### DETAILED DESCRIPTION OF THE EMBODIMENTS

As used herein, the term "and/or" includes any and all combinations of one or more of the associated listed items.
The terminology used herein is for the purpose of describing particular embodiments only and is not intended to be limiting of the invention.

As used herein, the singular forms "a", "an" and "the" are intended to include the plural forms as well, unless the context clearly indicates otherwise.

Relative terms such as "below" or "above" or "upward" or "downward" or "upper" or "lower" may be used herein to describe a relationship of one element, surface, area, or portion to another element, surface, area, or portion as illustrated in the figures. It will be understood that these terms are intended to encompass different orientations of a device in addition to the orientation depicted in the figures.

Embodiments of the invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

Embodiments of the invention are described with reference to drawings included herewith. Same and/or similar reference numbers refer to same and/or similar structures throughout. It should be noted that the drawings are schematic in nature.

### (First Embodiment)

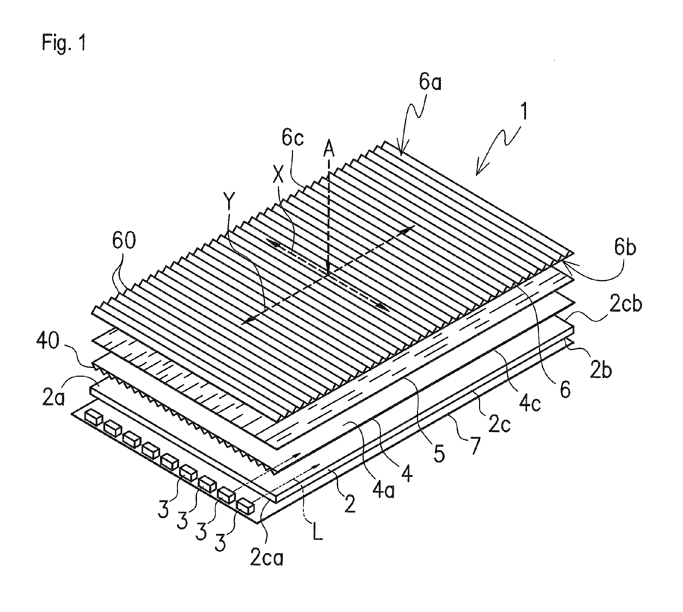

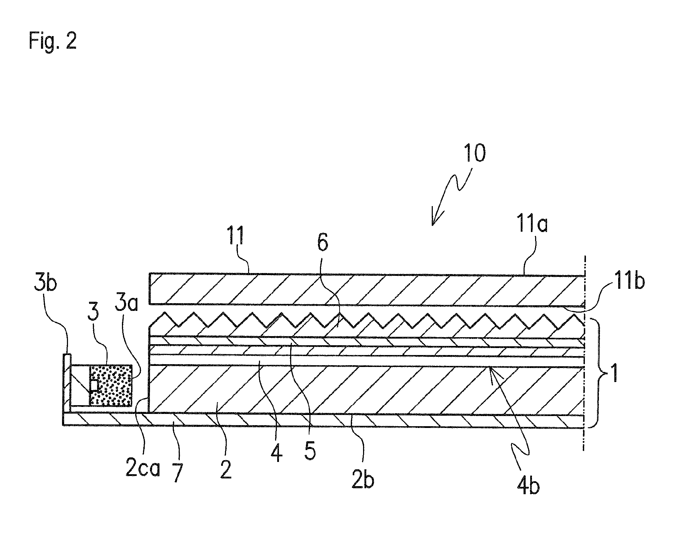

A first embodiment of a planar lighting device and a display device according to the present invention will be described with reference to Fig. 1 and Fig. 2. Fig. 1 shows an exploded perspective view of a backlight unit as planar lighting device of a first embodiment according to the present invention.

A planar lighting device 1 shown in Fig. 1 includes a light-guide plate 2 including an upper surface 2a as a light-exit surface and a lower surface 2b opposite to the upper surface 2a, a peripheral side surface 2c extending between a peripheral edge of the upper surface 2a and a peripheral edge of the lower surface 2b; a light source 3 including a light-emitting surface 3a arranged to face a first side surface 2ca included in the peripheral side surface 2c of the light-guide plate 2, the light source 3 with a center line that passes through a center of the light-emitting surface 3a of the light source 3 and that extends perpendicularly to a first side surface 2ca included in the peripheral side surface 2c of the light-guide plate 2; a first prism sheet 4 including an upper surface 4a as a light-exit surface, a lower surface 4b (shown in Fig. 2) opposite to the upper surface 4a as a light-exit surface, and a peripheral side surface 4c extending between a peripheral edge of the upper surface 4a and a peripheral edge of the lower surface 4b, and prisms 40 on the lower surface 4b facing the upper surface 2a of the light-guide plate 2, and ridges of the prisms 40 on the lower surface 4b extending parallel to the center line L that passes through a center of the light-emitting surface 3a of the light source 3; and a second prism sheet 6 including an upper surface 6a as a light-exit surface and a lower surface 6b opposite to the upper surface 6a, and a peripheral side surface 6c extending between edges of the upper surface 6a and edges of the lower surface 6b, and prisms 60 on the upper surface 6a, and the second prism sheet 6 being positioned above the first prism sheet 4.

The light-emitting surface 3a of the light source 3 is arranged to face a first side surface 2ca of the light-guide plate 2 and is a surface to emit light from the light source 3 into the light-guide plate 2. Also, the center line L passing through a center of the light-emitting surface 3a of the light source 3 is shown as an imaginary line passing through a center of the light-emitting surface 3a perpendicularly to light-emitting surface 3a of light source 3, and an extended end of the center line L extends into the first side surface 2ca perpendicularly to the first side surface 2ca of the light-guide plate 2. Since the light-emitting surface 3a of the light source 3 is arranged to face the first side surface 2ca of the light-guide plate 2, the center line L of the light-emitting surface 3a of the light source 3 shown in Fig. 1 indicates a direction of the light to be transmitted in the light-guide plate 2.

The light guide plate 2 is a light guide having a plate shape or sheet shape. The light guide plate 2 is designed at the first side surface 2ca thereof to receive light emitted from the light-emitting surface 3a of the light source 3, is designed to change a direction of the light being transmitted in the light-guide plate 2, and is designed to emit the light from the upper surface 2a as the light-exit surface 2a of the light-guide plate 2.

The first prism sheet 4 on the lower surface 4b thereof includes prisms 40 extending in parallel with the center line L passing through the center of the light-emitting surface 3a of the light source 3, in other words, the direction of the light being transmitted in the light-guide plate 2. Accordingly, when inclined surfaces of the prisms 40 of the first prism sheet 4 receive light emitted from the upper surface 2a of the light-guide plate 2, the light will be refracted toward two directions. More specifically, the light is directed in two directions that are perpendicular to the center line L passing through the center of the light-emitting surface 3a of the light source 3 in plan view. As a result, the light transmitted through the first prism sheet 4 will be light having two peaks of light intensity distribution in two directions perpendicular to the center line L of the light-emitting surface 3a of the light source 3.

Also, the second prism sheet 6 includes prisms 60 on the upper surface 6a thereof, and ridges 60a of the prisms 60 extend substantially perpendicularly to the center line L passing through the center of the light-emitting surface 3a of the light source 3, i.e. to the direction in which light is transmitted in the light-guide plate. Accordingly, light with spreads in two directions is condensed in a direction Y, which is parallel to the center line L passing through the center of the light-emitting surface 3a of the light source 3. Consequently, intensified light with the wider angle in the X direction crossing the direction of light being transmitted in the light guide plate 2 will be obtained while the high intensity of light of the planar lighting device 1 is maintained.

Also, the ridges 60a of the prisms 60 of the second prism sheet 6 are explained to extend substantially perpendicular to the center line L that passes through the center of the light-emitting surface 3a of the light source 3. Here, "substantially perpendicularly to the center line L" includes an angular range of 90 degrees ± two to three degrees to the center line L.

As the first prism sheet 4 and the second prism sheet 6, a BEF (Brightness Enhancement Film: Product name) sheet made by Sumitomo 3M Limited is adoptable, for example. The apex angle of prism 40 included in the first prism sheet 4 and the apex angle of prism 60 included in the second prism sheet 6 are selectable in accordance with a required angle of emitted light. The prism 40 of the first prism sheet 4 and the prism 60 of the second prism sheet 60 are arranged to extend at an angle with respect to each other, when viewed from above. In this embodiment, the prisms 40 of the first prism sheet 4 and the prisms 60 of the second prism sheet 6 are arranged to extend to cross each other, when viewed from above. The prisms 40 of the first prism sheet 4 are arranged on a lower surface 4b of the first prism sheet 4, and the prisms 60 of the second prism sheet 6 are arranged on an upper surface 6a of the second prism sheet 6.

The light-guide plate 2 may be made of light-transmitting resin such as polycarbonate resin and acrylic resin, for example. Also, it is possible to arrange white-colored dots, and/or prisms on the upper surface 2a as the light-exit surface and/or the lower surface 2b. The white-colored dots may be arranged by printing. It is possible to adjust light path, and/or intensity of emitted light in directions from the upper surface 2a of the light-guide plate 2 by variation of size, density, and position of the white-colored dot(s). Also, when prism(s) are arranged, it is possible to adjust light path, and/or intensity of emitted light in a desired direction from the upper surface 2a of the light guide plate 2 by variations of the number of the prisms, intervals and angle(s) of the inclined surface(s) of the prism(s). In the light-guide plate 2 of the present embodiment, the upper surface 2a as the light-exit surface is configured to emit more intensified light in an upward inclined direction, which is an upward inclined direction inclined to the direction of light being transmitted in the light-guide plate.

In this embodiment, the planar lighting device 1 may further include a light-diffusion sheet 5 arranged between the first prism sheet 4 and the second prism sheet 6. When the light-diffusion sheet 5 is arranged between the first prism sheet 4 and the second prism sheet 6, it can be expected that light polarized by the first prism sheet 4 in two directions will be diffused. This light-diffusion sheet 5, for example, can be made of transparent resin such as acrylic resin, polycarbonate resin, polyethylene terephthalate (PET) resin. Silica particles may be distributed in the transparent resin to enhance diffusion effect. The light diffusion sheet 5 may include a groove of v-shaped cross section and/or a groove of lenticular shaped cross section which extend(s) in parallel with the center line L of the light-emitting surface 3a of the light source 3. Also, the light diffusion sheet 5 may have an anisotropic diffusion coefficient to diffuse light to be wider-angled in the direction perpendicular to the center line L of the light-emitting surface 3a of the light source 3 than in the direction parallel to the center line L of the light-emitting surface 3a of the light source 3.

The above mentioned embodiment is configured to emit light in an upward inclined direction (that is inclined to the direction of light being transmitted in the light-guide plate), but with the above mentioned structure of the planar lighting device 1, it can be expected that intensified light with the wider-angle in the X direction will be obtained.

The light source 3 can be mounted on a substrate. In the present embodiment, as shown in Fig. 2, a plurality of light sources as light source 3 are arranged along the first side surface 2ca of the light-guide plate 2. Also, the substrate 3b shown in Fig. 2 may be an elongated substrate elongated along the first side surface 2ca of the light-guide plate 2. The surface opposite to the light-emitting surface 3a of the light source 3 is mounted on the substrate 3b. Also, a reflective sheet 7 may be arranged under the light source 3. The reflective sheet 7 may extend to cover the lower surface 2b of the light-guide plate 2. A metal plate with light reflectivity, a metal film, a metal foil, or a white-colored reflection sheet can be adopted as the reflective sheet 7. In this embodiment, it is possible to adopt a silver-deposited film, and also, it is possible to adopt an aluminum-deposited film. This reflective sheet 7 together with the prism sheets is considered to be supported on and/or adhered to a holder and/or frame (not shown) etc. Also, in Fig. 1 is shown with the substrate 3b omitted.

Also, light-emitting diodes (LEDs) as the light source 3 may be arranged in a line. Also, an LED package including a plurality of LED elements may be arranged. A fluorescent tube may also be arranged as the light source 3. It is also possible to arrange LEDs that emit white light as the light source 3. The LEDs that emit white-colored light can be, for example, a combination of LED element that is a semi-conductor light-emitting element and phosphor layer. As the LED element, for example, blue light-emitting (range of wavelength: 470 to 490 nm, for example) LED element or ultraviolet light-emitting (range of wavelength: 220 to less than 470 nm, for example) LED element can be used. For example, it is possible to use a combination of semi-conductor layers of gallium nitride compound semiconductor (InGaN-based compound semiconductor) layered on an insulative substrate that may be a sapphire substrate. It is possible to seal the semi-conductor light-emitting element by light-transmitting resin such as a silicone resin. A phosphor that can be excited by light emitted from the LED element may be mixed in the resin sealing the LED element. Also, it is possible to arrange a phosphor layer positioned parallel to the light-emitting surface 3a of the light source 3. It is possible to select a phosphor among various kinds of phosphors including YAG phosphor and RGB phosphor as phosphor to be excited by the above-mentioned LED elements. As a light source to emit white-colored light, it is possible to arrange a combination of light-emitting elements that emit light of wavelength ranges different from one another, and also, a combination of various light-emitting element(s) and/or various phosphor(s) are adoptable.

Also, Fig. 2 shows an enlarged cross sectional view of a main part of the planar lighting device shown in Fig. 1. Fig. 2 also shows an enlarged cross sectional view of a main part of a display device according to a first embodiment of the display device, which includes the planar lighting device and a display panel arranged over the planar lighting device. As shown in Fig. 2, the display device 10 of the present embodiment includes a display panel 11 and the above-mentioned planar lighting device 1 as a backlight unit arranged at an opposite side (at the side of lower surface 11b of the display panel 11 in Fig. 2) of the display surface of the display panel 11. These members are housed in and/or supported on a support housing, which is not shown. In this embodiment, the display surface of the display panel 11 is indicated as 11a, and the light-exit surface of the planar lighting device 1 is indicated as the upper surface 6a.

As the above-mentioned display panel 11, a transmissive or a semi-transmissive liquid crystal display panel is adoptable. For example, a transmissive liquid crystal display panel is provided with a panel body including an upper substrate with transparent electrode and an oriented film and a polarization plate, a lower substrate with transparent electrode and an oriented film and a polarization plate, and a liquid crystal member sealed by a seal member in a space between the upper substrate and the lower substrate. As technology of a panel body, there are TFT liquid crystal display, STN liquid crystal display, and TN liquid crystal display etc.

The planar lighting device of this embodiment discloses a structure that a light-diffusion sheet is arranged between the first prism sheet 4 and the second prism sheet 6. Accordingly, light divided by the first prism sheet 4 in two directions will be diffused while the general directivity of light is maintained, and then will be received by the second prism sheet 6. A part of light to be received by the second prism sheet 6 will be reflected downward when received by the second prism sheet 6. The reflected light will re-enter the light-diffusion sheet 5, diffused, and return to the second prism sheet 6. Accordingly, light emitted from the light-emitting surface of the planar lighting device becomes more intensified when light that is to become the emitted light is more diffused.

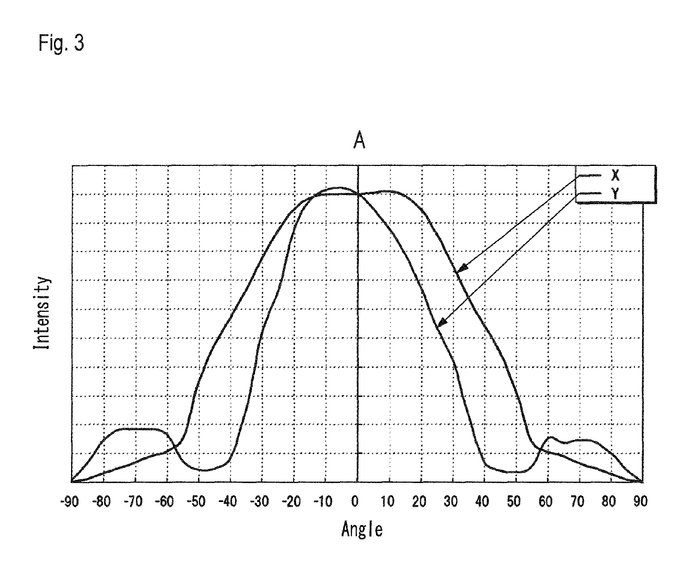

Fig. 3 shows a result of measured directivity of light emitted from a planar lighting device which is made based on the planar lighting device according to the first embodiment of the present invention. For more details, directivity of light in a direction (two-headed arrow X shown in Fig. 1) perpendicular to the center line L passing through the center of the light-emitting surface 3a of the light source 3 and directivity of light in a direction (two-headed arrow Y shown in Fig. 1) parallel to the center line L passing through the center of the light-emitting surface 3a of the light source 3 are measured and compared with each other. Note that the horizontal axis "angle" of graph shows angles toward X direction and Y direction with reference to the line A (0 degree) perpendicular to the light-emitting surface of the planar lighting device 1. The vertical axis "intensity" of graph shows a relative intensity of emitted light.

As shown in Fig. 3, compared with emitted light in the two-headed arrow Y directions in Fig. 1, the directivity of outgoing light in the two-headed arrow X directions, directed by the prism(s) of first prism sheet, is wider while intensity of emitted light maintained. Accordingly, it is found that emitted light achieving wide-angled light in the two-headed arrow X directions can be obtained. Also, in a planar lighting device that adopts two prism sheets including prisms arranged on respective upper surfaces of the two prism sheets, in which prisms of the one prism sheet and prisms of the other prism sheet are perpendicular to each other, directivity of emitted light in the two-headed arrow X directions becomes to be almost same as or narrower than the directivity of emitted light in the two-headed Y directions according to an embodiment of the present invention.

When the planar lighting device 1 according to the present embodiment is used in the display device 10 as shown in Fig.2, it is possible to obtain a display device achieving different viewed angles in the vertical direction and the horizontal direction of the display panel 11 of the display device 11. For example, it is possible to be adopted in a car navigation system and in a display device including a television set etc, whose display may be required to have different viewed angles in a vertical direction and a horizontal direction. This is because a situation in which more than one person view a display panel from different positions and/or different directions is considered.

### (second embodiment)

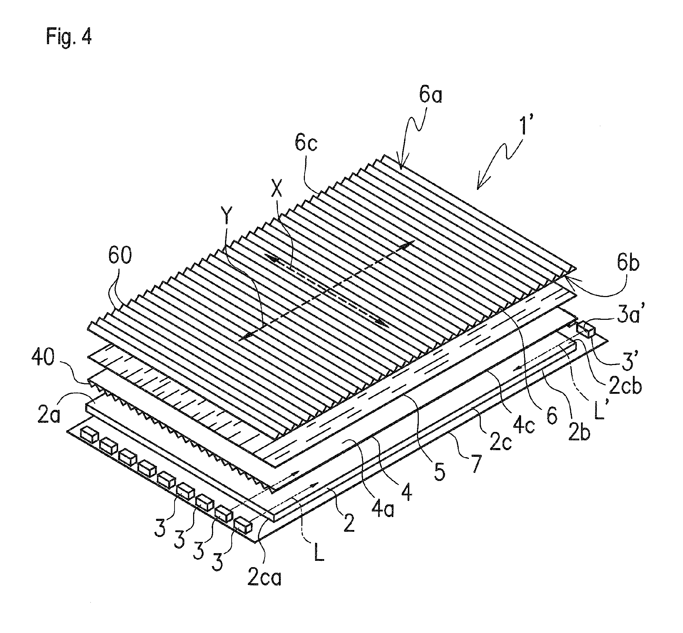

Next, Fig. 4 shows a second embodiment of a planar lighting device according to the present invention, is an exploded perspective view showing a backlight unit as a planar lighting device according to a second embodiment of the present invention. The point different from the first embodiment is that light sources are arranged to face two side surfaces 2ca, 2cb included in the peripheral side surface 2c of the light-guide plate 2.

For more details, the planar lighting device 1' according to the second embodiment shown in Fig. 4 includes a light-guide plate 2 that includes an upper surface 2a as a light-exit surface, a lower surface 2b opposite to the upper surface 2a, and a peripheral side surface 2c extending between a peripheral edge of the upper surface 2a and a peripheral edge of the lower surface 2b; a light source 3 as a first light source including a light-emitting surface 3a that faces a first side surface 2ca included in the peripheral side surface 2c of the light-guide plate 2; and a light source 3'as a second light source including a light-emitting surface 3a' that faces a second side surface 2cb included in the peripheral side surface 2c of the light-guide plate 2. In the peripheral side surface 2c of the light-guide plate, the second side surface 2cb is positioned opposite to the first side surface 2ca. As explained in the first embodiment, the light-emitting surface of the light source is a surface arranged to face a peripheral side surface and a surface to emit light from the light source into the light-guide plate. Also, a center line L (L') of the light-emitting surface of the light source is shown as an imaginary line perpendicularly passing through a center of the light-emitting surface of the light source, and the center line's extended end perpendicularly enters a peripheral side surface of the light-guide plate and extends straight through the light guide plate 2. The light-emitting surface of the light source is arranged to face a peripheral side surface of the light-guide plate, the center line L of the light-emitting surface 3a of the first light source 3 shown in Fig. 4 indicates a direction of light from the light-emitting surface 3a of the first light source 3 being propagated in the light-guide plate 2. Also, the center line L' of the light-emitting surface 3a' of the second light source 3' indicates a direction of light from the light-emitting surface 3a' of the second light source 3' being propagated in the light-guide plate 2. Between the first side surface 2ca and the second side surface 2cb in the light-guide plate 2, the propagation direction from the first light source 3 and the propagation direction from the second light source 3' are opposite to each other. Note that direction parallel to the center line L of the light-emitting surface 3a of the first light source 3 is parallel to the center line L' of the light-emitting surface 3a' of the second light source 3'. Also, direction perpendicular to the center line L of the light-emitting surface 3a of the light source 3 is perpendicular to the center line L' of the light-emitting surface 3a' of the second light source 3'.

Also, similarly to the planar lighting device 1 according to the first embodiment, a planar lighting device 1' according to a second embodiment includes a first prism sheet 4 including an upper surface 4a as a light-exit surface, a lower surface 4b opposite to the upper surface 4a, and a peripheral side surface 4c extending between a peripheral edge of the upper surface 4a and a peripheral edge of the lower surface 4b, and including prisms 40 which are arranged on the lower surface 4b facing the upper surface 2a of the light-guide plate, and whose ridges extend in parallel with the center line L of the light-emitting surface 3a of the light source 3; and a second prism sheet 6 including an upper surface 6a as a light-exit surface, a lower surface 6b opposite to the upper surface 6a, and a peripheral side surface 6c extending between a peripheral edge of the upper surface 6a and a peripheral edge of the lower surface 6b, and including prisms 60 which are arranged of the upper surface 6a, and the second prism sheet 6 being positioned over the first prism sheet 4.

Furthermore, in this embodiment, the planar lighting device 1' may include a light-diffusion sheet 5 being arranged between the first prism sheet 4 and the second prism sheet 6.

In the second embodiment, it is possible to switch illumination of the first light source 3 and the second light source 3' to change the propagation direction of light. Also, wider-angled intensified outgoing light is expected to be obtained when the first light source 3 and the second light source 3' are simultaneously illuminated.

### (a third embodiment)

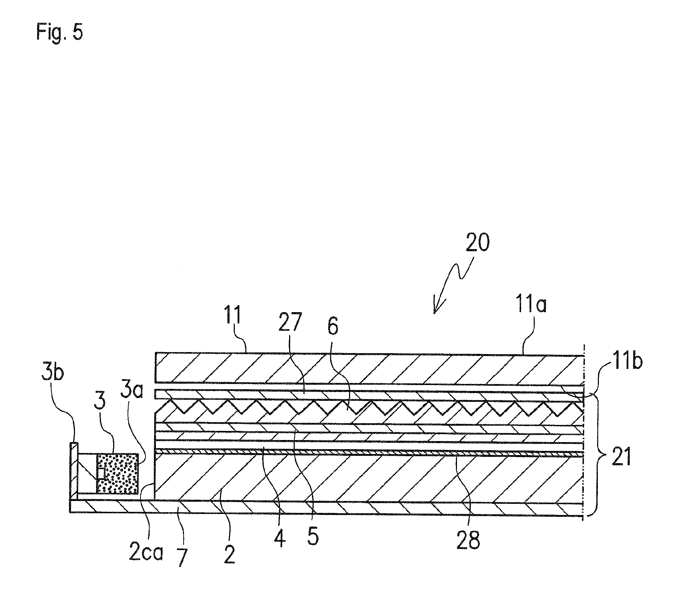

Fig. 5 shows an enlarged cross sectional view of a main part of a planar lighting device according to a third embodiment of a planar lighting device. Fig. 5 also shows an enlarged cross sectional view of a main part of a display device 20 according to a second embodiment of the display device, which includes the planar lighting device 21 and a display panel 11 that is arranged over the planar lighting device 21.

The point different from the first embodiment, the planar lighting device 21 of the third embodiment further includes a view-angle restriction filter 27 arranged over the second prism sheet 6.

For more details, the planar lighting device 21 according to this embodiment includes a light-guide plate 2 including an upper surface 2a as a light-exit surface and a lower surface 2b opposite to the upper surface 2a, a peripheral side surface 2c extending between a peripheral edge of the upper surface 2a and a peripheral edge of the lower surface 2b; a light source 3 including a light-emitting surface 3a arranged to face a first side surface 2ca included in the peripheral side surface 2c of the light-guide plate 2, and the light source 3 with a center line extending perpendicular to the first side surface 2ca; a first prism sheet 4 including an upper surface 4a as a light-exit surface, a lower surface 4b opposite to the upper surface 4a, a peripheral side surface 4c extending between an edge of the upper surface 4a and an edge of the lower surface 4b, and the first prism sheet 4 including prisms 40 which are arranged on the lower surface 4b facing the upper surface 2a of the light-guide plate 2, and whose ridges extend in parallel with the center line L of the light-emitting surface 3a of the light source 3; and a second prism sheet 6 including an upper surface 6a as a light-exit surface, a lower surface 6b opposite to the upper surface 6a, a peripheral side surface 6c extending between an edge of the upper surface 6a and an edge of the lower surface 6b, and the second prism sheet 6 including prisms 60 which are arranged on the upper surface and being arranged over the first prism sheet 4. It is disclosed that ridges 60a of the prisms 60 included in the second prism sheet 6 extend perpendicularly to the center line L of the light-emitting surface 3a of the light source 3. Furthermore, the planar lighting device 21 includes a view-angle restriction filter with a louver 27a and is arranged above the second prism sheet 6.

The second prism sheet 6 arranged in the planar lighting device 20 according to the third embodiment includes the prisms 60 each of whose apex angles is set to be greater than 90 degrees.

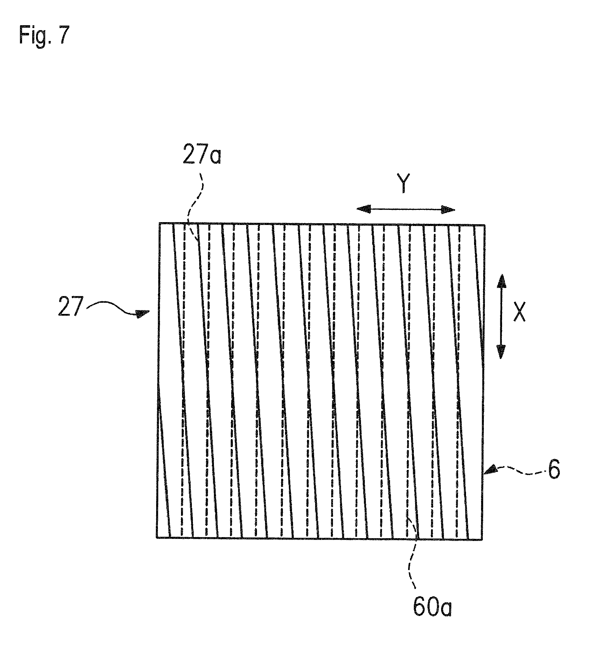

Fig. 7 is a plan view showing a relationship of louver 27a of a view-angle restriction filter 27 in a plan view and ridges 60a of prisms 60 of the second prism sheet 6 according to the third embodiment of a planar lighting device. The louver 27a of the view-angle restriction filter 27 and ridges 60a of the prisms 60 of the second prism sheet 6 are arranged to cross each other with an angle, when viewed from above. Also, the reference number 60a shown in Fig. 7 indicates ridges of the prisms 60.

The above mentioned view-angle restriction filter 27 is a sheet shaped optical film including a film with a louver structure laminated on a base material layer such as PET (Polyethylene terephthalate) film. As the view-angle restriction filter 27, light control film(s) of 3M (Registered trademark) company may be used. In this view-angle restriction filter 27, a plurality of louvers 27a are arranged to extend slightly inclining with respect to a direction (wider-angled light-exit direction X) perpendicular to the center axis L of the light-emitting surface 3a of the light source 3.

As mentioned above, in the third embodiment, since the view-angle restriction filter 27 that includes a plurality of louvers 27a and restricts the visible range is arranged above the second prism sheet 6, outgoing light in the outgoing light direction Y with directivity of light narrower than in the outgoing light direction X with wide-angled directivity is suppressed in directions except a desired direction. Furthermore, outgoing light in the above mentioned wide-angled light-exit direction X remains the same as wide-angled. Accordingly, it is possible to obtain a display device maintaining a wide-angled view and preventing light from outgoing in directions except desired direction(s).

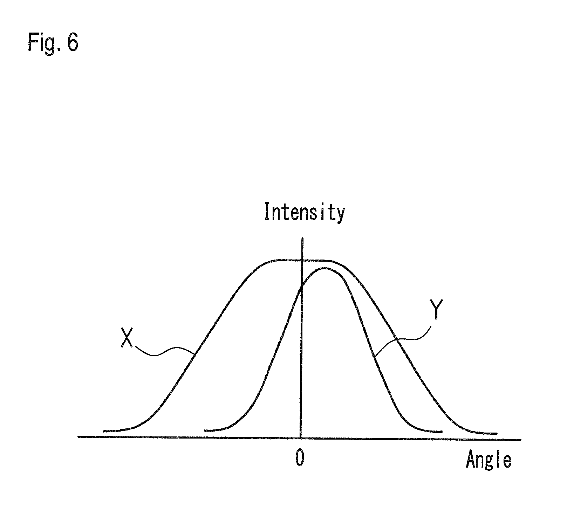

Also, because apex angle of the prism 60 of the second prism sheet 6 is set to be greater than 90 degrees, light-exit direction will be tilted. Accordingly, as shown in Fig. 6, it is possible to shift the peak of light directivity in the narrower-angled light-exit direction Y. For example, to shift the directivity peak of light in the narrower-angled light-exit direction Y, an affect by the second prism sheet 6 should be considered. To shift the peak of light directivity by ten to 15 degrees, considering an affect of material of the second prism sheet 6, the prism 60 arranged on the upper surface 6a of the second prism sheet 6 has an apex angle that falls in a range of 100 degrees to 135 degrees in many cases.

Furthermore, since the louver 27a of the view-angle restriction filter 27 and ridge 60a of the prism 60 of the second prism sheet 6 are arranged to cross each other with an angle, when viewed from above, transmission change and interference pattern of light can be sustained. That is, in a case where the louver 27a and the ridge 60a of the prism 60 are in parallel with each other when viewed from above, even a slight position gap of the louver 27a and the ridge 60a of the prism 60 may greatly change the transmission of light. Also, in this case, interference pattern of light may be easy to notice due to differently spaced arrangements of the louver 27a and the ridge 60a of the prism 60. However, in a configuration according to the present invention, the louver 27a is arranged with an angle with respect to the ridge 60a of prism 60 that is arranged on the upper surface 6a of the second prism sheet 6. In other words, due to the louver 27a and the ridge 60a obliquely crossing to each other in a plan view, the above mentioned transmission change and interference pattern of light are expected to be reduced. The crossing angle of the louver 27a and the ridge 60a of the prism 60 is possible to be up to a maximum of 45 degrees, however, an improved effect would be expected even with the crossing angle of about five degrees.

Also, the planar lighting device 20 may include a protection layer 28 arranged on the upper surface 2a of the light-guide plate 2. The protection layer 28 may be a layer made of PET. Also, the protection layer 28 may be a layer made of elastomer. For more details, there may be a case where the first prism sheet 4, which is made of acrylic ultraviolet curable resin, may scratch the light-guide plate 2, which is made of polycarbonate resin or acrylic resin. Accordingly, the protection layer 28 made of the above-mentioned material and arranged on the upper surface 2a of the light-guide plate 2 can be a scratch-resistant layer.

### (a fourth embodiment)

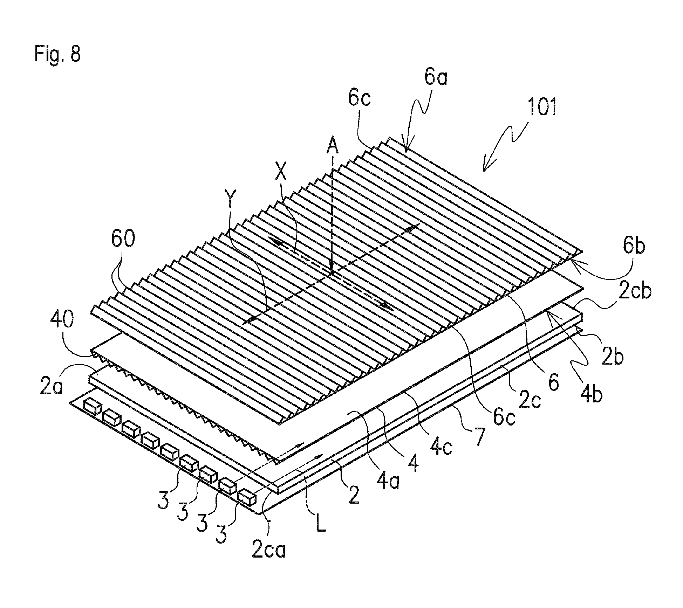

Fig. 8 is an exploded perspective view showing a backlight unit as a planar lighting device according to a fourth embodiment of planar lighting device of the present invention. The planar lighting device 101 includes a light-guide plate 2 that includes an upper surface 2a as a light-exit surface, a lower surface 2b opposite to the upper surface 2a, and a peripheral side surface 2c extending between a peripheral edge of the upper surface 2a and a peripheral edge of the lower surface 2b; a light source 3 including a light-emitting surface 3a that faces a first side surface 2ca included in the peripheral side surface 2c of the light-guide plate 2, and a center line L that passes through a center of the light-emitting surface 3a of the light source 3 being perpendicular to the first side surface 2ca included in the peripheral side surface 2c of the light-guide plate 2; a first prism sheet 4 including an upper surface 4a as a light-exit surface, a lower surface 4b opposite to the upper surface 4a, a peripheral side surface 4c extending between a peripheral edge of the upper surface 4a and a peripheral edge of the lower surface 4b, and a prism 40 arranged on the lower surface 4b of the first prism sheet 4, and the lower surface 4b facing the upper surface 2a of the light-guide plate 2, and the prism 40 that is arranged on the lower surface and extends in parallel with the center line L of the light emitting surface of the light source 3; and a second prism sheet 6 being positioned over the first prism sheet 4 and including an upper surface 6a as a light-exit surface, a lower surface 6b opposite to the upper surface 6a, a peripheral side surface 6c extending between a peripheral edge of the upper surface 6a and a peripheral edge of the lower surface 6b, a prism 60 arranged on the upper surface 6a of the second prism sheet 6. It is disclosed that the prism 60 of the second prism sheet 6 extends substantially perpendicular to the center line L of the light-emitting surface 3a of the light source 3.

The planar lighting device 101 according to the fourth embodiment of the present invention is expected to be used in a display device wherein intensity of outgoing light is suppressed in a direction perpendicular to the display surface, depending on a use. For more details, in this embodiment, it is disclosed that a structure without a light-diffusion sheet arranged between the first prism sheet 4 and the second prism sheet 6. Also, it is possible to adjust directivity of light by the first prism sheet 4 with the prism 40 whose apex angle is shifted from 90 degrees.

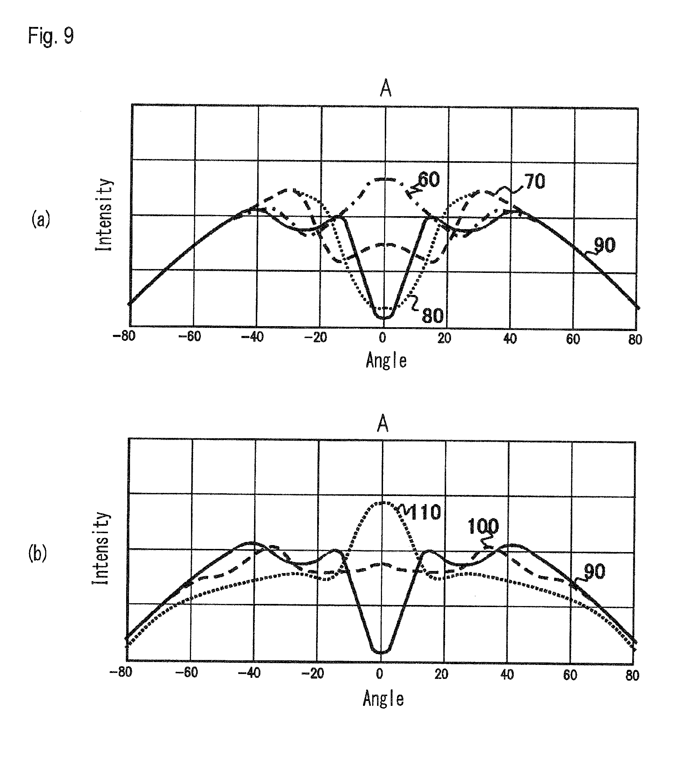

Fig. 9 is a graph showing a relationship of angle variations of apex of prisms 40 arranged on the first prism sheet 4 and intensity of outgoing light from light-exit surface, in the planar lighting device 101 according to the fourth embodiment.

With reference to Fig. 9, a relationship of light distribution and apex angle of the prism 40 included in the first prism sheet 4 will be explained. Fig. 9 is a graph showing a relationship of light distribution of the planar lighting device 101 as a backlight unit and apex angle of prism 40 included in the prism sheet 4. Fig. 9(a) shows cases of the apex angle, which is 90 degrees or less: cases of the apex angle 60 degrees, 70 degrees, and 90 degrees. Fig. 9(b) shows cases of the apex angle, which is 90 degrees or more: cases of the apex angle 90 degrees, 100 degrees, and 110 degrees. In Fig. 9(a) and 9(b), "Intensity" of vertical axis indicates a relative intensity of outgoing light, and "Angle" of horizontal axis indicates an angle toward the X directions with the use of Line A that is normal to the light-exit surface of the planar lighting device 101 as a reference line. A reference number indicating each curved line showing directivity of outgoing light also indicates the apex angle.

In Fig. 9(a), when the apex angle of the prism 40 of the prism sheet 4 is 90 degrees, intensity of outgoing light is least at zero degree from the Line A but the intensity of outgoing light is greater in an angle from 15 degrees to 40 degrees and in an angle from -15 degrees to - 40 degrees. This indicates the above-mentioned directivity of light in two directions. Also, when the apex angle of the prism 40 of the prism sheet 4 is 80 degrees, intensity of outgoing light is least at zero degree from the Line A but the intensity of outgoing light is slightly greater in a wider angle range than the case of the apex angle being 90 degrees. Furthermore, when the apex angle of the prism 40 of the prism sheet 4 is 70 degrees, intensity of outgoing light at zero degree from the Line A is maintained to some extent while the intensity of outgoing light is greatest at ±30 degrees. Also, when the apex angle of the prism 40 of the prism sheet 4 is 60 degrees, intensity of outgoing light is greatest at zero degree from the Line A while the intensity of outgoing light at ±40 degrees is also fairly maintained.

Similarly in Fig. 9(b), when the apex angle of the prism 40 of the prism sheet 4 is 100 degrees, a general intensity of outgoing light is obtained in a wider angle range of ±60 degrees. When the apex angle of the prism 40 of the prism sheet 4 is 110 degrees, intensity of outgoing light is greatest at zero degree from the Line A but the intensity of light gradually declines around ±20 degrees.

Accordingly, in case that intensity of light in a direction at zero degree from the Line A is desired to be sustained, the apex angle of the prism 40 of the first prism sheet 4 is preferable to be within a range of 80 degrees to 90 degrees. Also, in case that light emission with a wider angle range in a direction including a direction with zero degree from the Line A is required, the apex angle of the prism 40 of the first prism sheet 4 is preferable to be within a range of 60-70 degrees or 100-110 degrees. In other words, even in a case without a light-diffusion sheet, the planar lighting device 101 as a backlight unit will be able to obtain intensified outgoing light in a wider angle range including a direction normal to the light-exit surface. This planar lighting device without the use of light-diffusion effect of a light-diffusion sheet is not required to consider light loss due to the light-diffusion sheet, resulting in reducing the number of required members. Also, it is possible to arrange the first prism sheet 4 and the second prism sheet 2 that are integrally molded together.

Also, to adjust the outgoing light in a direction of zero degree from the Line A, it is possible to form a flat surface at a ridge line of the prism 40, which becomes to have a trapezoid cross-sectional shape. In Fig. 1, Fig. 4, and Fig. 8, a light source 3 is arranged to face a shorter side surface of the light-guide plate 2, and also, it is possible to arrange a light source 3 to face a longer side of the light-guide plate 2, when a wide view angle from side to side is required in a car navigation system including a wide screen, for example. In this case, a ridge line of prism of the first prism sheet is arranged to be perpendicular to the longer side, and a ridge line of prism of the second prism sheet is arranged in parallel with the longer side.

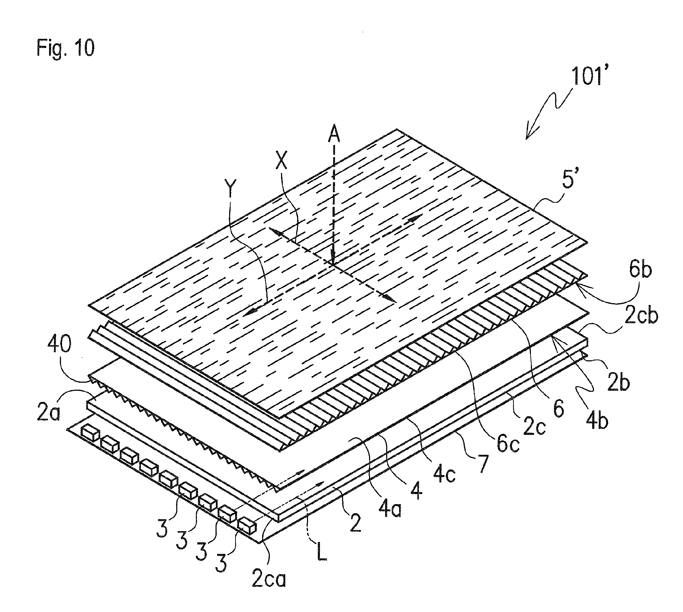

Fig. 10 is an exploded perspective view showing a backlight unit as a planar lighting device according to a fifth embodiment of a lighting device of the present invention. Different from the planar lighting device 101 of the fourth embodiment, the planar lighting device 101' of this embodiment includes a light-diffusion sheet 5' that is arranged over the second prism sheet 6. When the light-diffusion sheet 5' is arranged over the second prism sheet 6, directivity of light may slightly lessen but it is possible to expect that variation of brightness will be decreased. Also, in the planar lighting device 1 according to the first embodiment and shown in Fig. 1 and the planar lighting device 1' according to the second embodiment, it is disclosed that a structure in which a light-diffusion sheet 5 is arranged between the first prism sheet 4 and the second prism sheet 6. In these planar lighting devices 1(1'), it is possible to contain a structure in which a second diffusion sheet 5' is additionally arranged over the second prism sheet 6, and this makes it possible to obtain a visual effect to decrease variation of brightness.

In the above mentioned embodiments, it is explained that a planar lighting device and a display device according to the present invention is adoptable in a car navigation system, and it is also adoptable in a backlight system of other devices and apparatus, a display device or a lighting device. For example, it is considered to be adoptable in a backlight system and liquid crystal display of an electronic device such as a portable phone, personal digital assistance, mobile PC (personal computer), notebook PC, portable game console, and portable music player, and adoptable for illumination of digital signage and adoptable in general lighting such as a ceiling light and a base light.

Furthermore, while certain embodiments of the present inventive subject matter have been illustrated with reference to specific combinations of elements, various other combinations may also be provided without departing from the teachings of the present inventive subject matter. Thus, the present inventive subject matter should not be construed as being limited to the particular exemplary embodiments described herein and illustrated in the Figures, but may also encompass combinations of elements of the various illustrated embodiments.

Many alterations and modifications may be made by those having ordinary skill in the art, given the benefit of the present disclosure, without departing from the spirit and scope of the inventive subject matter. Therefore, it must be understood that the illustrated embodiments have been set forth only for the purposes of example, and that it should not be taken as limiting the inventive subject matter as defined by the following claims. The following claims are, therefore, to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the inventive subject matter.

### Reference Signs List

- 1, 1', 20, 101: planar lighting device
- 2: light-guide plate
- 3, 3': light source
- 3a, 3a': light-emitting surface
- 3b: substrate
- 4: first prism sheet
- 5, 5': light-diffusion sheet
- 6: second prism sheet
- 7: reflective sheet
- 10: display device
- 11: display panel
- 27: view-angle restriction filter
- 27a: louver of the view-angle restriction filter
- 28: protection layer
- 40: prisms of first prism sheet
- 60: prisms of second prism sheet
- 60a: ridges of prism of the second prism sheet
- L, L': center line passing through center of the light-emitting surface of the light source

## Claims

1. A planar lighting device comprising:
a light-guide plate comprising an upper surface as a light-exit surface, a lower surface opposite to the upper surface, and a peripheral side surface extending between a peripheral edge of the upper surface and a peripheral edge of the lower surface;
a light source comprising a light-emitting surface that faces a first side surface comprised in the peripheral side surface of the light-guide plate, and a center line that passes through a center of the light-emitting surface of the light source being perpendicular to the first side surface comprised in the peripheral side surface of the light-guide plate;
a first prism sheet comprising an upper surface as a light-exit surface, a lower surface opposite to the upper surface, a peripheral side surface extending between a peripheral edge of the upper surface and a peripheral edge of the lower surface, and a prism arranged on the lower surface of the first prism sheet, and the lower surface facing the upper surface of the light-guide plate, and a ridge line of the prism being extending in parallel with the center line of the light-emitting surface of the light source; and
a second prism sheet being positioned over the first prism sheet and comprising an upper surface as a light-exit surface, a lower surface opposite to the upper surface, a peripheral side surface extending between a peripheral edge of the upper surface and a peripheral edge of the lower surface, a prism arranged on the upper surface of the second prism sheet,
a ridge line of the prism arranged on the second prism sheet being extending substantially perpendicular to the center line of the light-emitting surface of the light source.

2. The planar lighting device further comprising:
a light diffusing sheet being arranged between the first prism sheet and the second prism sheet.

3. The planar lighting device according to claim 2,
wherein the light diffusing sheet has an anisotropic diffusion coefficient **characterized in that** light is more diffused in a direction perpendicular to the center line of the light-emitting surface of the light source than in a direction parallel to the center line of the light-emitting surface of the light source.

4. The planar lighting device according to claim 1, wherein the prism of the first prism sheet has an apex angle that is in a range from 60 degrees to 70 degrees.

5. The planar lighting device according to claim 1,
wherein the prism of the first prism sheet has an apex angle that is in a range from 100 degrees to 110 degrees.

6. The planar lighting device according to claim 1 further comprising:
a view-angle restriction filter comprising a louver and arranged over the second prism sheet.

7. The planar lighting device according to claim 1,
wherein the prism of the second prism sheet has an apex angle that is greater than 90 degrees.

8. The planar lighting device according to claim 6,
wherein the louver of the view-angle restriction filter and the ridge line of the prism arranged on the second prism sheet are arranged to extend at an angle with each other, when viewed from above.

9. The planar lighting device according to claim 1 further comprising:
a light source that comprises a light-emitting surface that faces a second side surface comprised in the peripheral side surface of the light-guide plate, and a center line that passes through a center of the light-emitting surface of the light source being perpendicular to the second side surface.

10. The planar lighting device according to claim 1 further comprising:
a light-diffusion sheet arranged over the second prism sheet.

11. A display device comprising:
the planar lighting device according to one among claim 1 to claim 10;
a display panel comprising an upper surface as a display surface, a lower surface opposite to the upper surface, and the lower surface facing the planar lighting device.

12. The display device according to claim 11,
wherein the display panel comprises a liquid crystal display panel.
